# EUROPEAN PATENT APPLICATION

(11) **EP 4 803 817 A1**
(43) Date of publication of application: **09.09.2026**
(21) Application number: 26163121.2
(22) Date of filing: 09.03.2026
(51) Int. Cl.: F24F 3/06, F24F 11/48, F24F 11/62, F24F 11/63, G05B 13/02

(54) **AIR CONDITIONER AND CONTROL METHOD THEREOF**

(30) Priority: 07.03.2025 KR 20250030060
(71) Applicant: LG Electronics Inc., Yeongdeungpo-gu Seoul 07336 (KR)
(72) Inventor: Lee, Sanghyun, Seoul (KR); Lee, Sangmoon, Seoul (KR); Ahn, Sangtae, Seoul (KR); Kim, Jinsik, Seoul (KR); Cho, Hwanseok, Seoul (KR); Park, Eunjoo, Seoul (KR)
(74) Representative: Vossius & Partner Patentanwälte Rechtsanwälte mbB

(57) **Abstract**

An air conditioner according to one aspect of the present disclosure includes: an outdoor unit including a compressor for compressing refrigerant; a plurality of indoor units, each connected to the outdoor unit through a refrigerant pipe; a sensor unit having a plurality of sensors; and a processor, wherein the processor performs reinforcement learning including state, action, and reward to determine indoor units arranged in the same space, and performs the reinforcement learning based on indoor unit-specific data collected by the sensor unit at a site where the plurality of indoor units is installed.

## Description

### BACKGROUND OF THE INVENTION

### 1. Field of the invention

The present disclosure relates to an air conditioner and a control method thereof. More specifically, it relates to an air conditioner capable of automatically classifying the installation spaces of indoor units.

### 2. Description of the Related Art

As the amount of time spent in indoor spaces such as residential or office spaces increases, the demand for comfort in indoor spaces has also grown. By installing indoor units, air that has undergone heat exchange or purification can be supplied to the indoor space, thereby enhancing the comfort in the indoor space.

An air conditioner can improve indoor comfort by supplying cooled air to the indoor space when the indoor temperature is high, and supplying heated air when the indoor temperature is low.

Conventional air conditioners perform tracking control based on user-input values such as temperature, airflow direction, and airflow speed. As a result, depending on the state of the indoor space, they may fail to provide sufficient comfort to occupants, or may not be able to quickly condition the indoor space to a comfortable state.

In addition, because they cannot reflect the changing conditions of the indoor space or the status of the indoor units, the duration for which the indoor space remains comfortable is relatively shortened.

Furthermore, in air conditioners that include multiple indoor units, it is difficult to maintain comfort quickly across all units, and managing each indoor unit individually presents challenges.

Prior Art Document 1 (Korean Registered Patent No. 10-2077175) discloses a method in which an air conditioning apparatus is mapped to one of a plurality of groups based on operating information received from the air conditioning apparatus, and the air conditioning apparatus is controlled using a cooling index prediction model corresponding to the mapped group.

However, in the case of Prior Art Document 1, since each individual air conditioning apparatus is matched to one of the groups, the unique characteristics of the individual air conditioning apparatus are lost, leaving only characteristics consistent with the average characteristics of the matched group. As a result, all indoor units are controlled according to the cooling index for the average values of the matched group, which may cause inconvenience to users.

In addition, since the model stored on the server is used, there is a risk that group mapping and prediction become impossible if the connection with the server is interrupted due to external or internal factors.

Prior Art Document 2 (Korean Registered Patent No. 10-1757446) discloses controlling an air conditioner based on indoor and outdoor environmental measurement values, heat index, thermal comfort index, and learning data.

However, in the case of Prior Art Document 2, the timing at which the user performs a control command for the air conditioner occurs only after the user has already perceived discomfort, making it difficult to achieve fast and accurate control that considers the user's condition or the state of the indoor space.

Therefore, research is needed on methods that can automatically classify the positions of multiple indoor units and quickly improve comfort through cooperative operation.

### SUMMARY OF THE INVENTION

For the purpose of the disclosure the following definitions apply, unless indicated otherwise or another definition is obvious for the skilled person based on the context of the disclosure:
The term observation means a number of sensor readings acquired by, e.g. a sensor unit and fed to a reinforcement-learning, RL, agent or algorithm as state observations (e.g., indoor temperature, indoor humidity, and pipe temperature for each indoor unit).

That is, a set of state observations (e.g., indoor temperature, indoor humidity, and pipe temperature for each indoor unit) may be acquired by the sensor unit and input to the RL agent, e.g. implemented in of the processor.

Accordingly the verb observe as being used in RL descriptions, block diagrams, etc. is to be understood as to observe the environment.

The term determination means deciding, based on a computed similarity (e.g., cosine similarity) and a threshold, whether two or more indoor units are arranged in the same indoor space.

That is, the determination correspond to the act of judging that two or more indoor units are arranged in the same indoor space based on computed similarity (e.g., cosine similarity) and a threshold.

Accordingly the verb to determine as being used in context with the RL, is to be understood as to determine collocated indoor units, i.e. outputting a result.

The term classification means grouping indoor units into space clusters and assigning a group identifier to each cluster based on the determination results, i.e. grouping/labeling indoor units as being in the same space (e.g., assigning a group ID).

Accordingly the verb classify in context of RL is to be understood as grouping or labelling. It is an object of the present disclosure to solve the above-described problems and other problems.

Another object of the present disclosure is to provide an air conditioner capable of automatically determining indoor units which are arranged in the same indoor space, and a control method thereof.

A yet another object of the present disclosure is to provide an air conditioner that can perform cooperative operation control of indoor units arranged in the same indoor space, thereby improving comfort more rapidly, and a control method thereof.

A further object of the present disclosure is to provide an air conditioner capable of collecting data from an installation site and learning from the collected data, and a control method thereof.

A further object of the present disclosure is to provide an air conditioner that can reduce the time and data processing volume required to automatically classify the installation spaces of indoor units, and a control method thereof.

To achieve the above or other objects, in an air conditioner and a control method thereof according to one aspect of the present disclosure, data collected at the installation site is learned to automatically classify the installation spaces of indoor units.

To achieve the above or other objects, in an air conditioner and a control method thereof according to one aspect of the present disclosure, reinforcement learning is performed based on indoor unit-specific data, and indoor units arranged in the same space are accurately determined.

To achieve the above or other objectives, an air conditioner according to one aspect of the present disclosure includes: an outdoor unit including a compressor for compressing refrigerant; a plurality of indoor units, each connected to the outdoor unit through a refrigerant pipe; a sensor unit having a plurality of sensors; and a processor.

The processor performs reinforcement learning including state, action, and reward to determine the indoor units arranged in the same space.

The processor performs the reinforcement learning based on indoor unit-specific data collected by a sensor unit at a site where the specific indoor unit of the plurality of indoor units is installed.

The state may be based on the indoor temperature of each indoor unit.

The action may be based on the pipe temperature of each indoor unit.

The reward may be determined based on the indoor temperature of the next state according to the pipe temperature.

Alternatively, the state may be based on the indoor humidity of each indoor unit, the action may be based on the pipe temperature of each indoor unit, and the reward may be determined based on the indoor humidity of the next state according to the pipe temperature.

The processor may calculate the degrees of spatial coincidence between the indoor units.

The processor may determine that indoor units between which the calculated degrees of spatial coincidence are greater than or equal to a threshold are arranged in the same space.

The reinforcement learning may be Q-learning.

The processor may calculate state scores based on the reward, and may calculate the degrees of spatial coincidence based on the state scores.

When the number of the plurality of indoor units is N, the processor may present the state scores in the form of an N × N table.

The processor may calculate the degrees of spatial coincidence by cosine similarity based on the state scores.

The processor may be provided in the outdoor unit.

The processor may be connected to a controller of the outdoor unit.

The controller may perform cooperative operation control of indoor units arranged in the same space.

When there is a plurality of outdoor units, the processor performing the reinforcement learning may be a processor connected to a controller of any one of the plurality of outdoor units.

The processor may include an AI model that learns from field operation data collected by the sensor unit during operation of the outdoor unit and the plurality of indoor units installed at the site.

The AI model is an artificial neural network trained with previously collected normal data, and may be periodically trained based on field operation data collected by the sensor unit during operation of the outdoor unit and the indoor units installed at the site.

The sensor unit may include an indoor temperature sensor, an indoor humidity sensor, and a pipe temperature sensor.

The indoor temperature sensor, the indoor humidity sensor, and the pipe temperature sensor may be provided for each indoor unit.

The processor may repeatedly perform the reinforcement learning until a preset reference number of times is reached.

The processor may perform the reinforcement learning after the sensor unit collects indoor unit-specific data for a preset reference time, and counting of the reference time may be reset before the reinforcement learning is started.

A control method of an air conditioner including an outdoor unit having a compressor for compressing refrigerant, a plurality of indoor units, each connected to the outdoor unit through a refrigerant pipe, and a sensor unit having a plurality of sensors may include: collecting indoor unit-specific data by the sensor unit for a preset reference time at a site where the plurality of indoor units is installed; and performing reinforcement learning composed of state, action, and reward based on the collected indoor unit-specific data to determine which indoor units are arranged in the same space.

The state may be based on the indoor temperature of each indoor unit or the indoor humidity of each indoor unit, the action may be based on the pipe temperature of each indoor unit, and the reward may be determined based on the indoor temperature or indoor humidity of the next state according to the pipe temperature.

The determining which of indoor units are arranged in the same space may include: calculating state scores based on the reward; calculating the degrees of spatial coincidence based on the state scores; and determining that indoor units between which the calculated degrees of spatial coincidence are greater than or equal to a threshold are arranged in the same space.

According to at least one of the embodiments of the present disclosure, indoor units arranged in the same indoor space can be automatically classified.

Furthermore, according to at least one of the embodiments of the present disclosure, cooperative operation control of indoor units arranged in the same indoor space can be performed to improve comfort more rapidly.

Furthermore, according to at least one of the embodiments of the present disclosure, data can be collected from an installation site, and learning can be performed using the collected data.

Furthermore, according to at least one of the embodiments of the present disclosure, the time and data processing volume required to automatically classify the installation spaces of indoor units can be reduced.

Meanwhile, various other effects will be directly or implicitly disclosed in the detailed description of embodiments of the present disclosure provided below.

### BRIEF DESCRIPTION OF THE DRAWINGS

FIG. 1 is a diagram illustrating the configuration of an air conditioner according to one embodiment of the present disclosure.
FIG. 2 is a schematic diagram of the outdoor unit and indoor units of FIG. 1.
FIG. 3 is a block diagram of an air conditioner according to one embodiment of the present disclosure.
FIG. 4 is a conceptual diagram of reinforcement learning for indoor unit observation according to one embodiment of the present disclosure.
FIG. 5 is a flowchart illustrating a control method of an air conditioner according to one embodiment of the present disclosure.
FIGS. 6 to 14 are diagrams referenced in the description of indoor unit observation according to one embodiment of the present disclosure.
FIGS. 15 and 16 are diagrams referenced in the description of a comparison between an indoor unit observation algorithm according to one embodiment of the present disclosure and a conventional Pearson correlation coefficient (PCC) algorithm.
FIG. 17 is a flowchart illustrating a control method of an air conditioner according to an embodiment of the present disclosure.

### DETAILED DESCRIPTION OF THE PREFERRED EMBODIMENTS

Hereinafter, the present disclosure will be described in detail with reference to the attached drawings. However, the present disclosure is not limited to these embodiments and may, of course, be modified in various forms.

In the drawings, parts not related to description are omitted in order to clearly and briefly describe the present disclosure, and identical or extremely similar parts are denoted by the same reference numerals throughout the specification.

The suffixes "module" and "part" for components used in the following description are simply given in consideration of the ease of writing this specification and do not have any particularly important meaning or role. Accordingly, the terms "module" and "part" may be used interchangeably.

In the present specification, terms such as first, second, and the like may be used to describe various elements; however, these elements are not limited by such terms. The terms are used solely for distinguishing one element from another.

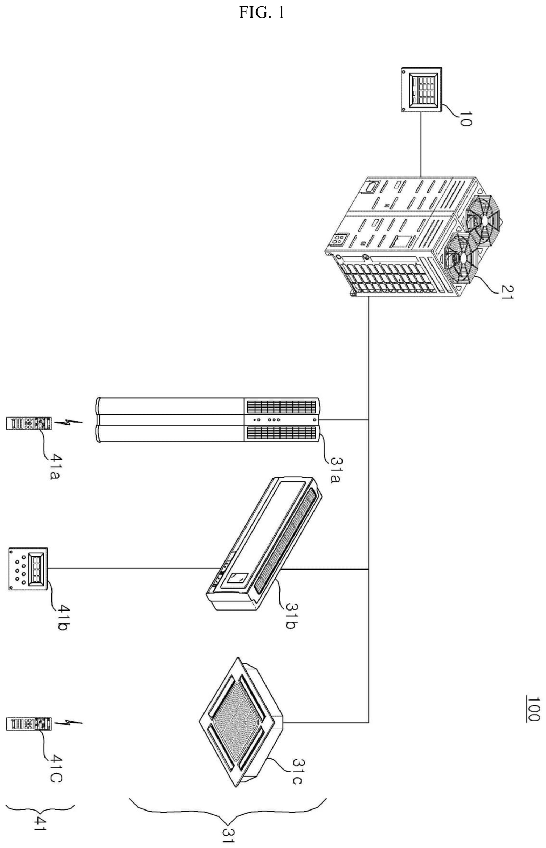

FIG. 1 is a diagram illustrating the configuration of an air conditioner according to one embodiment of the present disclosure.

Referring to FIG. 1, the air conditioner 100 according to one embodiment of the present disclosure may include at least one outdoor unit 21 and at least one indoor unit 31 connected to the outdoor unit 21. A plurality of indoor units 31 may each be connected to the outdoor unit 21 through a refrigerant pipe. A plurality of indoor units 31 may be connected to one outdoor unit 21, and the number of indoor units 31 connected to one outdoor unit 21 is not limited to the illustration.

The indoor unit 31 may include at least one of a stand-type indoor unit 31a, a wall-mounted indoor unit 31b, and a ceiling-mounted indoor unit 31c.

One outdoor unit 21 may be connected to various types of indoor units 31a, 31b, 31c. Of course, one outdoor unit 21 may also be connected to multiple indoor units of the same type. For example, the outdoor unit 21 may be connected to a plurality of ceiling-mounted indoor units 31c.

Meanwhile, the air conditioner 100 may further include at least one of a ventilation device, an air purification device, a humidification device, and a heater, and may operate in association with the operation of the indoor unit 31 and the outdoor unit 21.

The outdoor unit 21 may include a compressor (not shown) that compresses supplied refrigerant, an outdoor heat exchanger (not shown) that transfers heat between refrigerant and outdoor air, an accumulator (not shown) that extracts gaseous refrigerant from the supplied refrigerant and supplies it to the compressor, and a four-way valve (not shown) that selects a refrigerant flow path for heating operation. In addition, the outdoor unit 21 may further include multiple sensors, valves, and an oil recovery device.

The outdoor unit 21 may operate the provided compressor and outdoor heat exchanger to compress the refrigerant or perform heat exchange according to settings, thereby supplying the refrigerant to the indoor unit 31. The outdoor unit 21 may be driven by a central controller (not shown) or by a demand from the indoor unit 31. At this time, as the cooling/heating capacity varies in response to the indoor unit 31 being operated, the number of operating outdoor units and the number of operating compressors installed in the outdoor unit may also vary.

At this time, the outdoor unit 21 may supply the compressed refrigerant to the connected indoor unit 31.

The indoor unit 31 may receive the refrigerant from the outdoor unit 21 and discharge cooled or heated air into the indoor space. The indoor unit 31 may include an indoor heat exchanger (not shown), an indoor fan (not shown), an expansion valve (not shown) in which the supplied refrigerant expands, and multiple sensors (not shown).

In this case, the outdoor unit 21 and the indoor unit 31 may be connected by a communication line to transmit and receive data to and from each other, and the outdoor unit 21 and the indoor unit 31 may also be connected to the central controller via wired or wireless communication to operate under the control of the central controller.

A remote controller 41 may be connected to the indoor unit 31 to deliver a user's control command to the indoor unit 31 and to receive and display status information of the indoor unit 31. In this case, the remote controller 41 may communicate with the indoor unit 31 either through wired or wireless communication depending on the type of connection to the indoor unit 31.

Meanwhile, the air conditioner 100 may further include at least one sensor (not shown) capable of observing the state of indoor air. For example, the air conditioner 100 may further include one or more of: a temperature sensor for detecting indoor temperature, a humidity sensor for detecting indoor humidity, a pressure sensor for detecting indoor air pressure, and a sensor for measuring the amount of dust in the indoor air. The air conditioner 100 may also include a sensor capable of simultaneously collecting various data such as temperature, humidity, pressure, and amount of dust in the indoor air.

Meanwhile, the air conditioner 100 may perform communication with external devices 10, such as a server or a central controller, and may transmit and receive data therebetween.

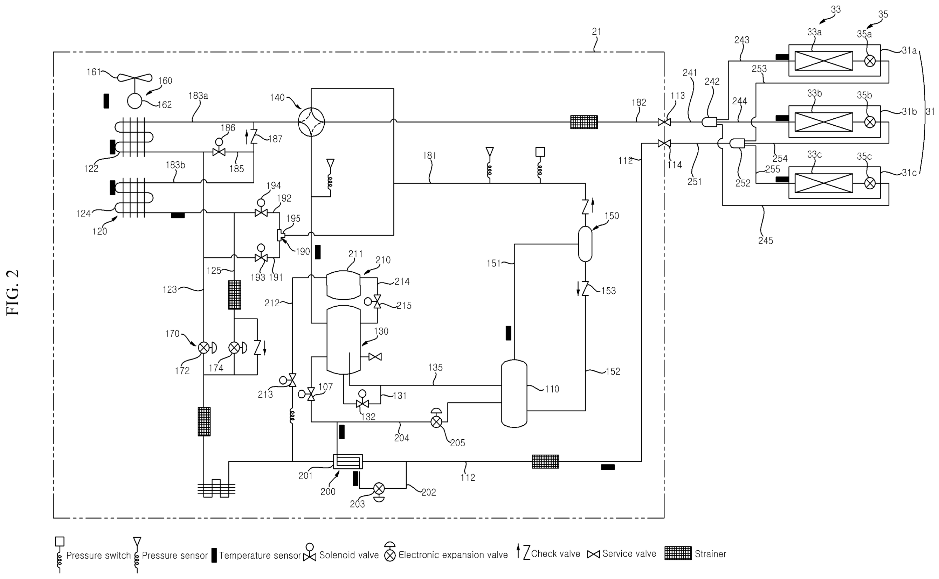

FIG. 2 is a schematic diagram of the outdoor unit and indoor units of FIG. 1.

Referring to FIG. 2, the air conditioner 100 according to one embodiment of the present disclosure may be divided into an outdoor unit 21 and an indoor unit 31. The air conditioner 100 may include a plurality of indoor units 31a to 31c.

The outdoor unit 21 may include a compressor 110 that compresses refrigerant, a compressor motor (not shown) that drives the compressor 110, an outdoor heat exchanger 120 that dissipates heat from the compressed refrigerant, an accumulator 130 that temporarily stores vaporized refrigerant, removes moisture and foreign substances, and supplies refrigerant of a constant pressure to the compressor, a cooling/heating switching valve 140 that changes the flow path of the compressed refrigerant, an oil separator 150, an outdoor blower 160 including an outdoor fan 161 disposed on one side of the outdoor heat exchanger 120 to promote heat dissipation of the refrigerant and an outdoor fan motor 162 for rotating the outdoor fan 161, and at least one expansion mechanism (for example, electronic expansion valves (EEV)) for expanding the condensed refrigerant.

More specifically, the outdoor unit 21 may include a gas pipe service valve 113 to which a gas pipe 182 is connected, and a liquid pipe service valve 114 to which a liquid pipe 112 is connected. The gas pipe service valve 113 and the liquid pipe service valve 114 may be connected to the indoor unit 31, and may circulate the refrigerant in the outdoor unit 21.

The compressor 110 may employ at least one of an inverter compressor and a constant-speed compressor. The high-temperature, high-pressure refrigerant discharged from the compressor 110 may flow to the oil separator 150 through a discharge-side pipe 151 of the compressor 110.

The outdoor unit 21 may include a first oil recovery pipe 131 that connects a lower side of the accumulator 130 to a suction-side pipe 135 of the compressor 110. An oil return valve 132 for regulating the flow of oil may be disposed in the first oil recovery pipe 131.

The outdoor unit 21 may further include a second oil recovery pipe 152 through which oil flows from the oil separator 150 to the compressor 110. A check valve 153 that ensures that oil flows in one direction may be disposed in the second oil recovery pipe 152.

The refrigerant discharged from the oil separator 150 may flow to the cooling/heating switching valve 140 through a refrigerant discharge pipe 181.

The outdoor heat exchanger 120 may transfer heat between outdoor air and refrigerant, and a plurality of outdoor heat exchangers 122 and 124 may be configured depending on the embodiment. The outdoor heat exchanger 120 may operate as a condenser during cooling operation and as an evaporator during heating operation.

A variable path valve 186 may be disposed between the first outdoor heat exchanger 122 and a variable path pipe 185. When the variable path valve186 is opened, the refrigerant flowing through the first outdoor heat exchanger 122 may flow to the cooling/heating switching valve 140 through the variable path valve 186, the variable path pipe 185, and the check valve 187. When the variable path valve 186 is closed, the refrigerant flowing through the first outdoor heat exchanger 122 may flow to a first heat exchanger-expansion valve connection pipe 123 during cooling operation, and the refrigerant flowing through the first heat exchanger-expansion valve connection pipe 123 may flow to the first outdoor heat exchanger 122 during heating operation.

An outdoor expansion valve 170 may expand the refrigerant flowing to the outdoor heat exchanger 120 during heating operation, and may allow the refrigerant to pass without expansion during cooling operation. An electronic expansion valve (EEV) capable of adjusting its opening degree according to an input signal may be used as the outdoor expansion valve 170.

The outdoor expansion valve 170 may include a first outdoor expansion valve 172 which expands the refrigerant flowing to the first outdoor heat exchanger 122 and a second outdoor expansion valve 174 which expands the refrigerant flowing to the second outdoor heat exchanger 124.

The first outdoor heat exchanger 122 may be connected to the cooling/heating switching valve 140 through a heat exchanger-switching valve connection pipe 183a. The first outdoor heat exchanger 122 may be connected to the outdoor expansion valve 170 through the first heat exchanger-expansion valve connection pipe 123.

The second outdoor heat exchanger 124 may be connected to the second outdoor expansion valve 174 through a second heat exchanger-expansion valve connection pipe 125.

The first outdoor expansion valve 172 may be disposed between the first heat exchanger-expansion valve connection pipe 123 and a supercooling liquid pipe 112'. The second outdoor expansion valve 174 may be disposed between the second heat exchanger-expansion valve connection pipe 125 and the supercooling liquid pipe 112'.

The outdoor unit 21 may further include a hot gas unit 190 for bypassing the refrigerant supplied to the outdoor heat exchanger 120 to the indoor unit 31 during heating operation. The hot gas unit 190 may include hot gas bypass pipes 191 and 192 and hot gas valves 193 and 194 for bypassing refrigerant. In this case, the first hot gas valve 193 and the second hot gas valve 194 may be selectively operated. For example, only the first hot gas valve 193 may be opened/closed, or only the second hot gas valve 194 may be opened/closed. Meanwhile, in this embodiment, a combining valve 195 may be disposed to combine the first hot gas bypass pipe 191 and the second hot gas bypass pipe 192.

The outdoor unit 21 may further include a subcooling unit 200 disposed on the liquid pipe 112. The subcooling unit 200 may include a subcooling heat exchanger 201, a subcooling bypass pipe 202 that bypasses the liquid pipe 112 and is connected to the subcooling heat exchanger 201, a first subcooling expansion valve 203 disposed on the subcooling bypass pipe 202 for selectively expanding the refrigerant flowing therethrough, a subcooling-compressor connection pipe 204 connecting the subcooling heat exchanger 201 and the compressor 110, a second subcooling expansion valve 205 disposed on the subcooling-compressor connection pipe 204 for selectively expanding the refrigerant flowing therethrough, an accumulator bypass pipe 206 connecting the accumulator 130 and the subcooling-compressor connection pipe 204, and/or a subcooling bypass valve 107 disposed on the accumulator bypass pipe 206 for controlling the refrigerant flowing therethrough.

The outdoor unit 21 may further include a receiver 210 disposed on the liquid pipe 112. The receiver 210 may store liquid refrigerant to regulate the amount of circulating refrigerant. The receiver 210 may store liquid refrigerant separately from the accumulator 130 in which liquid refrigerant is stored. For example, when the amount of circulating refrigerant is insufficient, the receiver 210 may supply refrigerant to the accumulator 130, and when the amount of circulating refrigerant is excessive, the receiver 210 may recover and store refrigerant.

The receiver 210 may include a receiver tank 211 for storing refrigerant and receiver valves 213 and 215 for regulating the flow of refrigerant.

A first receiver connection pipe 112 may connect the receiver tank 211 and the subcooled liquid pipe 112'. A first receiver valve 213 for controlling the flow of refrigerant may be disposed on the first receiver connection pipe 112.

The second receiver connection pipe 114 may connect the receiver tank 211 and the accumulator 130. A second receiver valve 215 for regulating the flow of refrigerant may be disposed on the second receiver connection pipe 114.

The indoor units 31a to 31c may include indoor heat exchangers 33a to 33c installed indoors to perform cooling/heating functions, indoor expansion valves 35a to 35c for expanding the supplied refrigerant, an indoor blower (not shown) including an indoor fan (not shown) disposed on one side of the indoor heat exchangers 33a to 33c to promote heat dissipation of the refrigerant and an indoor fan motor (not shown) for rotating the indoor fan, and a plurality of sensors (not shown). At least one indoor heat exchanger 33a to 33c may be installed in each of the indoor units 31a to 31c.

The air conditioner 100 may include a gas pipe connection pipe 241 connecting the gas pipe service valve 113 and a first distributor 242, and a liquid pipe connection pipe 251 connecting the liquid pipe service valve 114 and a second distributor 252.

The first distributor 242 may be connected to the indoor heat exchangers 33a to 33c through first to third gas branch pipes 243, 244, and 245. The second distributor 252 may be connected to the indoor heat exchangers 33a to 33c through first to third liquid branch pipes 253, 254, and 255.

The air conditioner 100 may be configured as a cooling unit for cooling an indoor space, or as a heat pump capable of cooling or heating the indoor space.

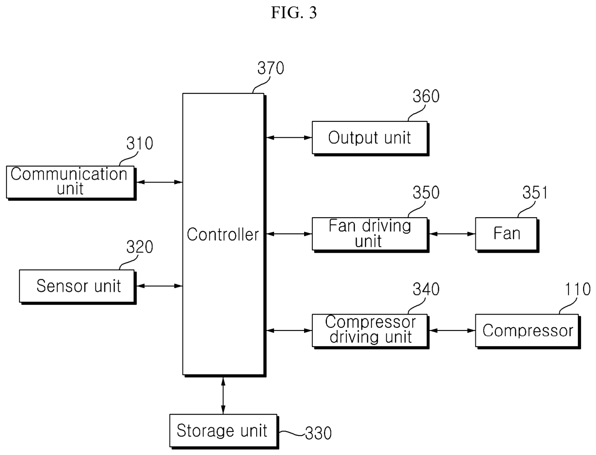

FIG. 3 is a block diagram of an air conditioner according to one embodiment of the present disclosure.

Referring to FIG. 3, the air conditioner 100 may include a sensor unit 320, a communication unit 310, a storage unit 330, a compressor driving unit 340, a fan driving unit 350, an output unit 360, and a controller 370. The air conditioner 100 according to various embodiments of the present disclosure may further include various components not illustrated in FIG. 3.

The communication unit 310 may include at least one communication module. The communication unit 310 may be provided in each of the outdoor unit 21 and the indoor unit 31, and the outdoor unit 21 and the indoor unit 31 may transmit and receive data to and from each other. For example, the method of communication between the outdoor unit 21 and the indoor unit 31 may be communication using a power line, serial communication (e.g., RS-485 communication), wired communication through a refrigerant pipe, or wireless communication such as Wi-Fi, Bluetooth, Beacon, or Zigbee.

Meanwhile, the communication unit 310 may transmit and receive data to and from external devices. For example, the communication unit 310 may establish a wireless communication channel with an external device (e.g., a mobile terminal), and may transmit and receive data regarding the status of each component provided in the air conditioner 100, occurrence of errors, and the like through the established wireless communication channel. The communication unit 310 may also connect to a server linked to an external network to transmit and receive data.

The sensor unit 320 may include a plurality of sensors to acquire various information. The sensor unit 320 may include a plurality of sensors for sensing, i.e. observing, the operating states of the outdoor unit 21 and the indoor units 31a to 31c.

The sensor unit 320 may transmit data regarding detection values detected through a plurality of sensors to the controller 370. For example, the sensor unit 320 may include a heat exchanger temperature sensor (not shown) for detecting the temperature of the outdoor heat exchanger 120 and/or the indoor heat exchanger 33, a pressure sensor (not shown) for detecting the pressure of refrigerant flowing through each pipe of the air conditioner 100, a pipe temperature sensor (not shown) for detecting the temperature of refrigerant flowing through each pipe of the air conditioner 100, an indoor temperature sensor (not shown) for detecting the indoor temperature, an outdoor temperature sensor (not shown) for detecting the outdoor temperature, an indoor humidity sensor (not shown) for detecting the indoor humidity, and so on.

The storage unit 330 may store programs for signal processing and control within the controller 370, and may also store signal-processed voice or data signals. For example, the storage unit 330 may store application programs designed for performing various tasks that can be processed by the controller 370, and may selectively provide some of the stored application programs upon request from the controller 370. Programs and the like stored in the storage unit 330 are not particularly limited as long as they can be executed by the controller 370.

Although FIG. 3 illustrates an embodiment in which the storage unit 330 is provided separately from the controller 370, the scope of the present disclosure is not limited thereto, and the storage unit 330 may be included within the controller 370.

The storage unit 330 may store data related to each component provided in the air conditioner 100. For example, the storage unit 330 may store data regarding detection values detected by a plurality of sensors included in the sensor unit 320. For instance, the storage unit 330 may store data regarding the operating frequency of the compressor 110, the pressure of refrigerant flowing into the compressor 110 (compressor low pressure), and the pressure of refrigerant discharged from the compressor 110 (compressor high pressure). For example, the storage unit 330 may store data regarding the rotational speed of the fan 351, the opening degree of each electronic expansion valve (EEV), the degree of superheat, and the degree of subcooling.

The compressor driving unit 340 may drive the compressor 110. For example, the compressor driving unit 340 may include a rectifier (not shown) for rectifying AC power into DC power and outputting the same, a DC capacitor for storing pulsating voltage from the rectifier, an inverter (not shown) having a plurality of switching elements, for converting the smoothed DC power into three-phase AC power of a predetermined frequency and outputting the same, and/or a compressor motor (not shown) for driving the compressor 110 according to the three-phase AC power output from the inverter.

The compressor driving unit 340 may change the operating frequency of the compressor 110 under the control of the controller 370. For example, the compressor driving unit 340 may change the operating frequency of the compressor 110 by changing the frequency of the three-phase AC power output to the compressor motor under the control of the controller 370.

The fan driving unit 350 may drive the fan 351 provided in the air conditioner 100. For example, the fan driving unit 350 may drive the outdoor fan 161 and/or the indoor fan (not shown). For instance, the fan driving unit 350 may include a rectifier (not shown) for rectifying AC power into DC power and outputting the same, a DC capacitor for storing pulsating voltage from the rectifier, an inverter (not shown) having a plurality of switching elements, for converting smoothed DC power into three-phase AC power of a predetermined frequency and outputting the same, and/or a motor for driving the fan according to the three-phase AC power output from the inverter.

Meanwhile, the fan driving unit 350 may be provided with separate configurations for driving the outdoor fan 161 and the indoor fan.

The fan driving unit 350 may change the number of revolutions of the fan 351 under the control of the controller 370. For example, the fan driving unit 350 may change the number of revolutions of the outdoor fan 161 by changing the frequency of the three-phase AC power output to the outdoor fan motor under the control of the controller 370. For example, the fan driving unit 350 may change the number of revolutions of the indoor fan by changing the frequency of the three-phase AC power output to the indoor fan motor under the control of the controller 370.

The output unit 360 may include a display device such as a display (not shown) or a light emitting diode (LED), and may display an operating state related to the operation of the air conditioner 100, occurrence of errors, and the like through the display device.

The output unit 360 may include an audio device such as a speaker, buzzer, etc. and may output sound effects related to the operation of the air conditioner 100 through the audio device, and may output a predetermined warning sound upon occurrence of an error.

The controller 370 may be connected to each component provided in the air conditioner 100, and may control the overall operation of each component. The controller 370 may transmit and receive data to and from each component provided in the air conditioner 100. The controller 370 may be provided not only in the outdoor unit 21 but also in at least one of the indoor unit 31 and/or the central controller. For example, the outdoor unit 21, the indoor unit 31, and the central controller may each include a controller 370 for controlling operation.

The controller 370 may include at least one processor. Here, the processor may be a general processor such as a central processing unit (CPU). Of course, the processor may be a dedicated device such as an application-specific integrated circuit (ASIC) or another hardware-based processor.

The controller 370 may learn data related to each component provided in the air conditioner 100 through machine learning such as deep learning, and may generate a learning model. The controller 370 may control each component provided in the air conditioner 100 by using data related to each component and a pre-trained learning model.

Machine learning refers to enabling a computer to learn from data and solve problems without a person directly instructing the computer with logic.

Deep learning refers to an artificial intelligence technology that teaches a computer human-like thinking methods based on artificial neural networks (ANN), allowing the computer to learn on its own like a human. The artificial neural network (ANN) may be implemented in the form of software or in the form of hardware such as a chip. For example, the artificial neural network (ANN) may include various types of algorithms such as a deep neural network (DNN), a convolutional neural network (CNN), a recurrent neural network (RNN), and a deep belief network (DBN).

The storage unit 330 may store data acquired from each component provided in the air conditioner 100, data for training an artificial neural network (ANN), and the like. For example, the storage unit 330 may store a database including data related to each component provided in the air conditioner 100 for training the artificial neural network (ANN), as well as weights and biases constituting the structure of the artificial neural network (ANN).

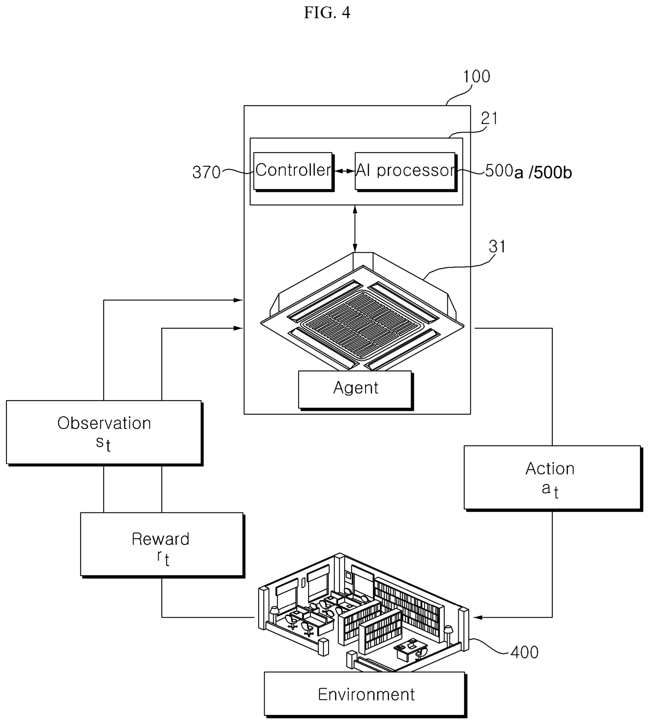

Meanwhile, the controller 370 may be connected to an artificial intelligence (AI) engine (see 500b in FIG. 4) that outputs at least one determination result using the artificial neural network, and may transmit and receive data to and from an AI engine 500b. For example, the controller 370 may train the AI engine 500b based on sensing data from the sensor unit 320. In addition, the controller 370 may input predetermined data into the AI engine 500b and receive a result value (determination result, classification result).

Alternatively, the controller 370 may include an AI engine 500b that outputs at least one determination result using an artificial neural network.

The AI engine 500b may include one or more processors.

The AI engine 500b may include a data acquisition unit (not shown), a model training unit (not shown), and/or a result generation unit (not shown). The data acquisition unit acquires data for each component provided in the air conditioner 100 and determines input data from which it learns among the acquired data. The model training unit learns the input data to generate a learning model. The model learning unit may update a generated learning model based on the data for each component provided in the air conditioner 100. By using the input data, among the data for each component provided in the air conditioner 100, and a trained learning model, the result generation unit may generate result data corresponding to the input data.

The controller 370 may perform training (on-site training) of an operation data estimation model based on an artificial neural network using field operation data collected from the sensor unit 320 during operation at a site where the outdoor unit 21 and the indoor unit 31 are installed.

After the on-site learning, the controller 370 may observe an abnormal state during operation of the air conditioner 100 based on the current operation data measured by the sensor unit 320 and the trained operation data estimation model.

An air conditioner system according to one embodiment of the present disclosure may include sensors capable of measuring, i.e. observing, the operating state of the system, and an AI engine 500b capable of performing on-site training or updating of an operation data estimation model using system operation data measured from the sensors. By performing additional training of a basic AI model to reflect on-site conditions, a site-specific model may be generated.

FIG. 4 is a conceptual diagram of reinforcement learning for indoor unit observation according to one embodiment of the present disclosure.

For the purpose of the disclosure the following definitions apply, unless indicated otherwise or another definition is obvious for the skilled person based on the context of the disclosure:
The term "agent" denotes a process-optionally implemented as or together with the AI engine (500b)-that executes the reinforcement learning algorithm, receives observations from the environment, selects actions pursuant to a policy, and computes the resulting rewards.

The term "environment" denotes the site environment in which the air conditioner is installed, including the plurality of indoor units (31), the outdoor unit (21), and the sensor unit (320) providing measurement data representative of the installation.

The term "policy" denotes an action-selection rule used by the agent during Q-learning (e.g., an *ε* - *greedy* policy) to choose the action to be applied in the current state in order to maximize expected reward.

The term "observation", as already defined above, denotes the sensor readings fed to the agent as state observations, including per-indoor-unit measurements such as indoor temperature (T), indoor humidity (RH), and pipe temperature (pipeT) acquired by the sensor unit (320).

Referring to FIG. 4, the air conditioner 100 may include a processor 500a for indoor unit observation. The processor 500a may perform reinforcement learning.

The processor 500a may include an AI model trained on field operation data collected from the sensor unit 320 during operation at a site where an outdoor unit 21 and a plurality of indoor units 31 are installed.

The sensor unit 320 may include an indoor temperature sensor, an indoor humidity sensor, and a pipe temperature sensor. The indoor temperature sensor, the indoor humidity sensor, and the pipe temperature sensor may be provided for each indoor unit 31.

The indoor temperature sensor may sense the indoor temperature, which is the temperature around the indoor unit 31 of the air conditioner 100, and may transmit a signal for the sensed indoor temperature to the processor 500a.

The indoor humidity sensor may measure the humidity of the indoor air, and may transmit a signal corresponding to the sensed humidity to the processor 500a.

The pipe temperature sensor is a sensor that senses the temperature of a refrigerant pipe connected to the indoor unit 31.

The pipe temperature sensor may include an inlet pipe temperature sensor that senses an inlet-side temperature and an outlet pipe temperature sensor that senses an outlet-side temperature. The pipe temperature sensor may transmit a signal corresponding to the sensed temperature to the processor 500a.

The processor 500a may be an AI processor including an AI model. The AI model may be an artificial neural network trained on previously collected normal data, and may be trained based on field operation data collected from the sensor unit during operation at a site where the outdoor unit 21 and the indoor unit 31 are installed. The processor 500a may perform training periodically, or may perform training upon a user command or upon occurrence of a predetermined event.

The processor 500a may be the above-described AI engine 500b and/or the AI engine 500b may fully or partially implemented in the processor 500a. The AI engine 500b may include an AI model trained on collected normal state operation data. The AI engine 500b may perform on-site training of a pre-trained operation data AI model using field data collected on-site.

The processor 500a, which may be or include the AI engine 500b, may perform reinforcement learning composed of state, action, and reward. The processor 500a may classify indoor units arranged in the same space, and may output an classification result to the controller 370.

The processor 500a may perform reinforcement learning based on indoor unit-specific data collected by the sensor unit 320 at a site where the indoor units 31 are installed.

The processor 500a may be provided in the outdoor unit 21.

The processor 500a may be connected to the controller 370 of the outdoor unit 21. In a case where a plurality of outdoor units 21 are provided, the processor 500a performing reinforcement learning may be a processor 500a connected to the controller 370 of any one of the plurality of outdoor units 21.

Alternatively, the processor 500a may be provided in the controller 370 of the outdoor unit 21. In a case where a plurality of outdoor units 21 are provided, the processor 500a performing reinforcement learning may be a processor 500a provided in the controller 370 of any one of the plurality of outdoor units 21.

Since the number of rooms and the indoor unit configuration for each room differ depending on the site, the air conditioner system needs to determine installation information at the site after the product is installed.

According to an embodiment of the present disclosure, site-specific installation information may be individually determined by utilizing edge computing of the processor 500a.

The processor 500a may determine the indoor unit configuration for each space. The air conditioner 100 may improve comfort within the space by performing cooperative operation control of indoor units located in the same space based on the determined indoor unit configuration.

According to an embodiment of the present disclosure, by utilizing artificial intelligence reinforcement learning, information on the installation spaces of indoor units 31 connected to a single outdoor unit 21 or a series of outdoor units 21 may be automatically explored, and the spaces may be classified.

Each indoor unit 31 may include a temperature sensor and a humidity sensor. Since the temperature and humidity values are similarly measured for each room, the indoor units 31 located in the same space may sense similar temperature and humidity values.

Each indoor unit 31 may be connected to the processor 500a through the outdoor unit 21, and the processor 500a may collect sensor information of the indoor units 31 through the outdoor unit 21.

In a case where there is a series of outdoor units 21, the processor 500a connected to the main outdoor unit may be utilized (e.g., indoor unit N : outdoor unit N : processor 1).

The reinforcement learning may be based on state (st), action (at), and reward (rt). The processor 500a may perform reinforcement learning based on indoor unit-specific data collected by the sensor unit 320 in a site environment 400 where a plurality of indoor units 31 are installed, and may automatically determine indoor units arranged in the same space.

A collected temperature and humidity may be determined, i.e. observed, as a state, and the collected pipe temperature may be determined as an action.

The reinforcement learning may be Q-learning. Q-learning is a reinforcement learning algorithm composed of environment, agent, state, action, and reward.

The agent, which is the air conditioner 100, may move to the next state by taking an action according to a policy in the current state. The processor 500a may observe the state in the installation site environment, take an action, and perform learning.

The agent, which is the air conditioner 100, may receive a reward (Q-value) for the action taken. The objective of the processor 500a is to maximize the reward resulting from the action. The processor 500a may be trained to select an action that yields the maximum reward.

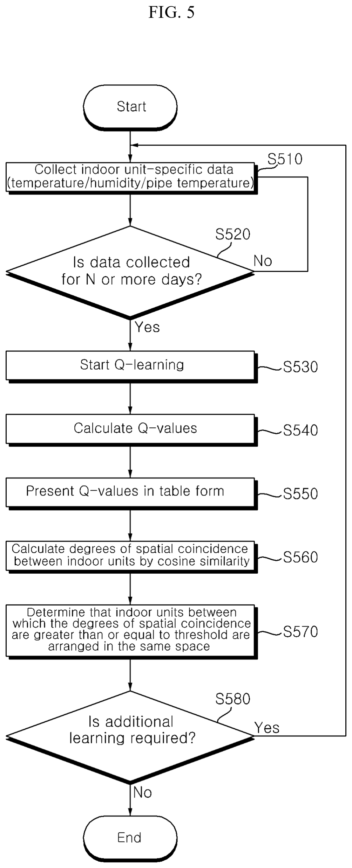

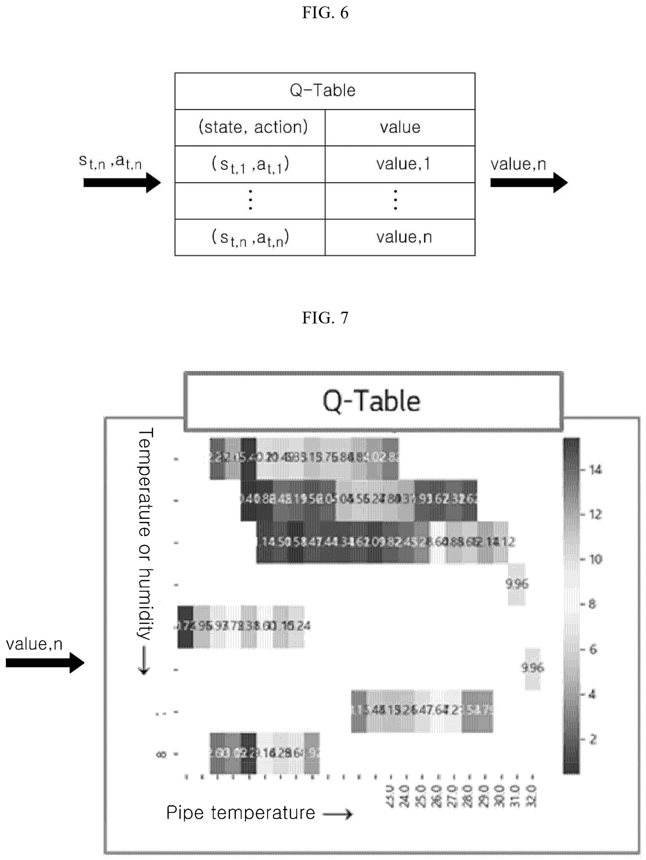

FIG. 5 is a flowchart illustrating a control method of an air conditioner according to one embodiment of the present disclosure, and FIGS. 6 to 14 are diagrams referenced in the description of indoor unit observation according to one embodiment of the present disclosure.

Referring to FIG. 5, at a site where the air conditioner 100 is installed, the sensor unit 320 may collect indoor unit-specific data for a preset reference time (e.g., N days) (S510).

Each indoor unit 31 may be provided with an indoor temperature sensor, an indoor humidity sensor, and a pipe temperature sensor, which respectively measure temperature, humidity, and pipe temperature.

The processor 500a may perform reinforcement learning composed of state, action, and reward based on the collected indoor unit-specific data, and may determine which indoor units are arranged in the same space (S530 to S570).

Once data is collected for the preset reference time (e.g., N days) (S520), the processor 500a may start Q-learning (S530).

In the process of taking an action to reach a better state from a given state (temperature, humidity), the processor 500a may observe the state and the action and obtain a reward.

Referring to FIG. 6, the processor 500a may calculate a state score (Q-value) based on the state, action, and reward (S540). The processor 500a may calculate the state score (Q-value) based on the reward.

The state may be based on the indoor temperature of each indoor unit 31 or the indoor humidity of each indoor unit 31. The action may be based on the pipe temperature of each indoor unit 31. The reward may be determined based on the indoor temperature or indoor humidity of the next state according to the pipe temperature.

The indoor temperature reaches the indoor temperature of the next state according to the pipe temperature. At this time, the processor 500a may determine whether the next state is a favorable state and calculate a reward.

Alternatively, the indoor humidity reaches the indoor humidity of the next state according to the pipe temperature. At this time, the processor 500a may determine whether the next state is a favorable state and calculate a reward.

The processor 500a may calculate the state scores (Q-values) between each indoor unit based on the reward.

Referring to FIG. 7, the processor 500a may present state scores (Q-values) calculated by Q-learning in a table format (S550). If the number of indoor units is N, the processor 500a may present the calculated state scores (Q-values) in an N × N table format.

The processor 500a may calculate the degrees of spatial coincidence by using the calculated state scores (Q-values) (S560).

The processor 500a may calculate the degrees of spatial coincidence between the indoor units (S560), and may determine that indoor units between which the calculated degrees of spatial coincidence are greater than or equal to a threshold are arranged in the same space (S570).

The processor 500a may calculate the degrees of spatial coincidence between the indoor units by cosine similarity by using the Q-value table (S560). Cosine similarity is a measure of similarity between two vectors by the cosine of the angle between the two vectors, and it can be applied to multiple dimensions. It may be determined that a cosine similarity value closer to 1 indicates greater similarity between two vectors.

The processor 500a may calculate state scores based on a reward, and may classify whether indoor units are located in the same space by cosine similarity by using the calculated state scores. Indoor units installed in the same space may have a high degree of spatial coincidence.

The processor 500a may determine that indoor units between which the degrees of spatial coincidence are greater than or equal to a threshold are arranged in the same space (S570). The processor 500a may determine that indoor units between which the calculated degrees of spatial coincidence are greater than or equal to a threshold are arranged in the same space.

According to an embodiment, the threshold may also be determined based on field data. Different threshold values may be applied for different sites, and the average value of a jump interval may be used. For example, if the value changes from 0 to 0.2 for the largest jump, the average value of 0 and 0.2, i.e., 0.1, may be used as the threshold. If the value changes from 0.6 to 0.8, the average value of 0.6 and 0.8, i.e., 0.7, may be used as the threshold.

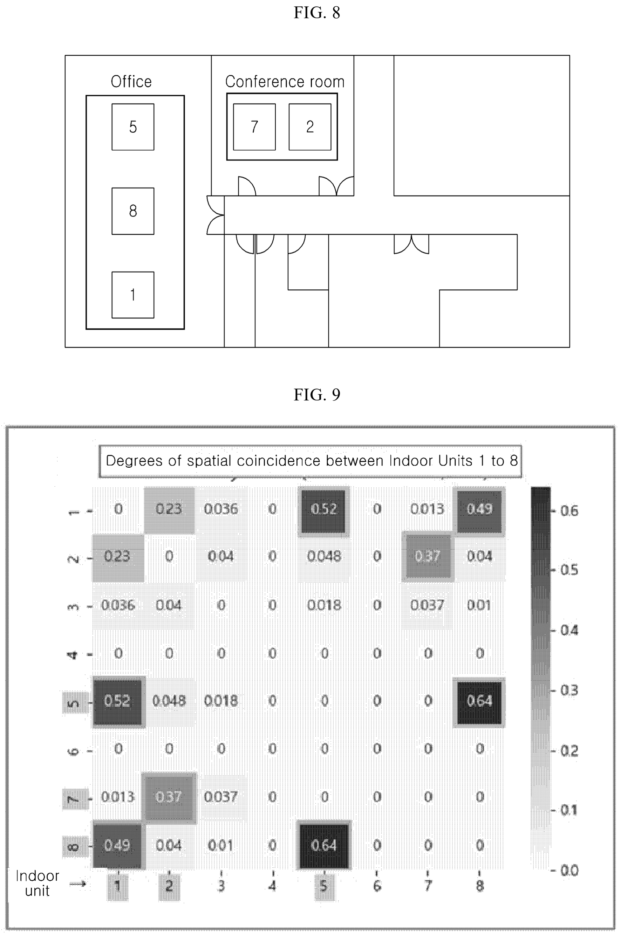

FIG. 8 is a simplified floor plan of a site where the air conditioner 100 is installed, and FIG. 9 illustrates a diagram showing degrees of spatial coincidence between indoor units arranged at the site of FIG. 8.

Among Indoor Units 1 through 8, Indoor Units 1, 2, 5, 7, and 8 are arranged on the floor shown in FIG. 8. In the office, Indoor Units 1, 5, and 8 are arranged, and in the conference room, Indoor Units 2 and 7 may be arranged.

Referring to FIG. 9, with respect to Indoor Unit 1, the degree of spatial coincidence with Indoor Unit 5 is 0.52, and the degree of spatial coincidence with Indoor Unit 8 is 0.49, which are higher than those with other indoor units.

In addition, with respect to Indoor Unit 5, the degree of spatial coincidence with Indoor Unit 1 is 0.52, and the degree of spatial coincidence with Indoor Unit 8 is 0.64, which are higher than those with other indoor units.

In addition, with respect to Indoor Unit 8, the degree of spatial coincidence with Indoor Unit 1 is 0.49, and the degree of spatial coincidence with Indoor Unit 5 is 0.64, which are higher than those with other indoor units. Accordingly, Indoor Units 1, 5, and 8 may be classified as indoor units arranged in the same space.

Meanwhile, the degree of spatial coincidence between Indoor Units 2 and 7 is 0.23, which is higher than the degrees of spatial coincidence with the other indoor units. Accordingly, Indoor Units 2 and 7 may be classified as indoor units arranged in the same space.

The processor 500a may repeatedly perform the reinforcement learning until a preset reference number of times (N times) is reached.

If additional learning is required (S580), data collection may be performed again from the beginning, and if additional learning is not required, the classification of indoor units may be terminated. For example, once the processor 500a has performed the classification of indoor units the reference number of times (N times), it may determine that no further learning is required and terminate the classification of indoor units.

The processor 500a may perform the reinforcement learning after the sensor unit 320 collects data of each indoor unit for a preset reference time, and the counting of the reference time may be reset before the reinforcement learning is started. For example, reinforcement learning may be performed after data is collected again for N days.

According to an embodiment, when the classification of indoor units has been performed N times, the controller 370 may select any one of the latest value, the value with the highest probability, or the average value of the N classification results as a final result.

The controller 370 may perform cooperative operation control of indoor units arranged in the same space. For example, the controller 370 may control the product ON/OFF, mode, and air volume of indoor units arranged in the same space.

In a method of classifying indoor units using a model stored in a server, group mapping and prediction may not be possible if the connection with the server is lost.

However, according to the present disclosure, the processor 500a may classify spaces in which indoor units are arranged by using a classification model based on edge-based data collected from the sensor unit 320. In addition, indoor units arranged in the same space may be controlled to perform cooperative operation.

For example, a comfort level of a predetermined space may be set, and comfort control may be performed based on the set comfort level. The comfort control may be a method of calculating a comfort temperature for an indoor space based on temperature and humidity data of the indoor space, and controlling the airflow accordingly.

The air conditioner 100 may classify spaces in which indoor units are arranged and may determine a comfort level for each space. The air conditioner 100 may form different airflows according to the comfort level. For example, it may control the operation of vanes and indoor unit fans according to the comfort level.

According to an embodiment of the present disclosure, indoor units may also be accurately classified based on the ratio of ON/OFF operation (operation rate) of the indoor units.

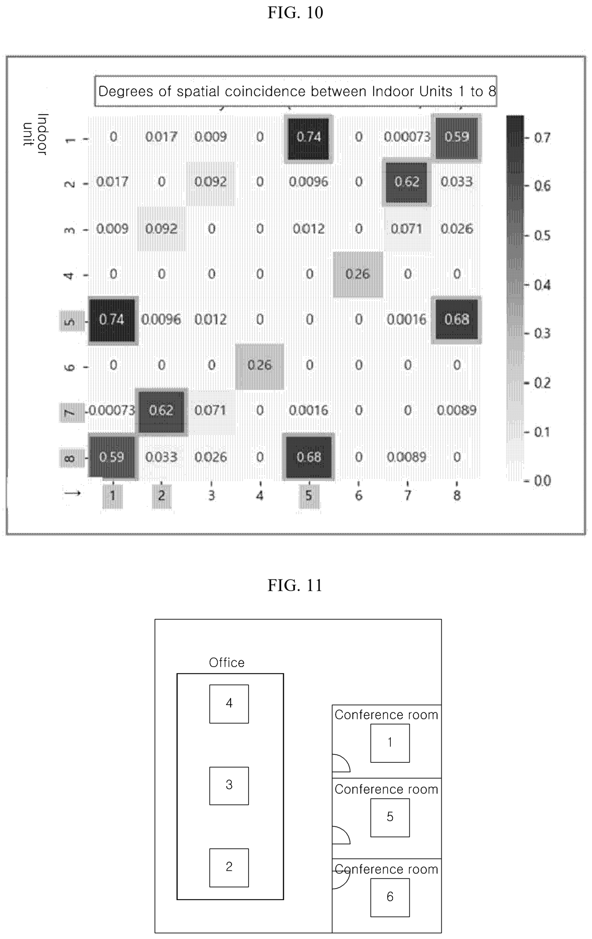

FIG. 9 illustrates experimental results when the operation rate of indoor units is in the range of 10% to 30%, and FIG. 10 illustrates experimental results at the same site when the operation rate of indoor units is in the range of 30% to 50%.

Referring to FIG. 10, with respect to Indoor Unit 1, the degree of spatial coincidence with Indoor Unit 5 is 0.74, and the degree of spatial coincidence with Indoor Unit 8 is 0.59, which are higher than those with other indoor units.

In addition, with respect to Indoor Unit 5, the degree of spatial coincidence with Indoor Unit 1 is 0.74, and the degree of spatial coincidence with Indoor Unit 8 is 0.68, which are higher than those with other indoor units.

In addition, with respect to Indoor Unit 8, the degree of spatial coincidence with Indoor Unit 1 is 0.59, and the degree of spatial coincidence with Indoor Unit 5 is 0.68, which are higher than those with other indoor units. Accordingly, Indoor Units 1, 5, and 8 may be classified as indoor units arranged in the same space.

Referring to FIGS. 9 and 10, it is observed that the degrees of spatial coincidence between Indoor Units 1, 5, and 8 located in the same space increase as the operation rate increases.

In addition, the degree of spatial coincidence between Indoor Units 2 and 7 is 0.62, which is higher than the degrees of spatial coincidence with the other indoor units. Accordingly, Indoor Units 2 and 7 may be classified as indoor units arranged in the same space.

Referring to FIGS. 9 and 10, it is observed that the degrees of spatial coincidence between Indoor Units 2 and 7 located in the same space increase as the operation rate increases.

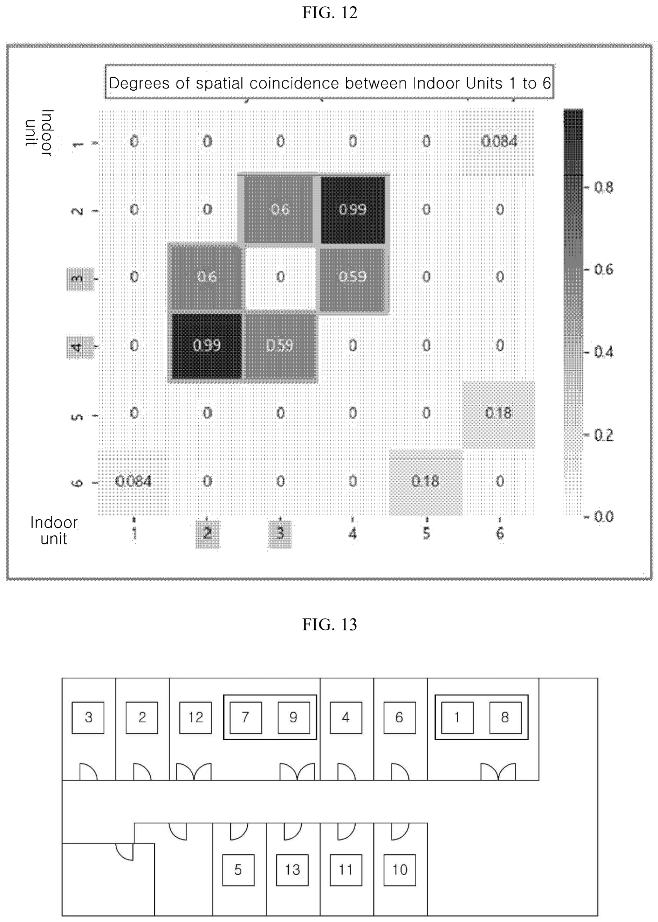

FIG. 11 is a simplified floor plan of another site, and FIG. 12 is a diagram showing the degrees of spatial coincidence between indoor units arranged at the site of FIG. 11 when the operation rate of the indoor units is 10% or less.

Referring to FIG. 11, Indoor Units 2, 3, and 4 are arranged in the office, and Indoor Units 1, 5, and 6 may be respectively arranged in the separate conference rooms.

Referring to FIG. 12, with respect to Indoor Unit 2, the degree of spatial coincidence with Indoor Unit 3 is 0.6, and the degree of spatial coincidence with Indoor Unit 4 is 0.99, which are higher than those with other indoor units.

In addition, with respect to Indoor Unit 3, the degree of spatial coincidence with Indoor Unit 2 is 0.6, and the degree of spatial coincidence with Indoor Unit 8 is 0.59, which are higher than those with other indoor units.

In addition, with respect to Indoor Unit 4, the degree of spatial coincidence with Indoor Unit 2 is 0.99, and the degree of spatial coincidence with Indoor Unit 5 is 0.95, which are higher than those with other indoor units.

Accordingly, Indoor Units 2, 3, and 4 may be classified as indoor units arranged in the same space.

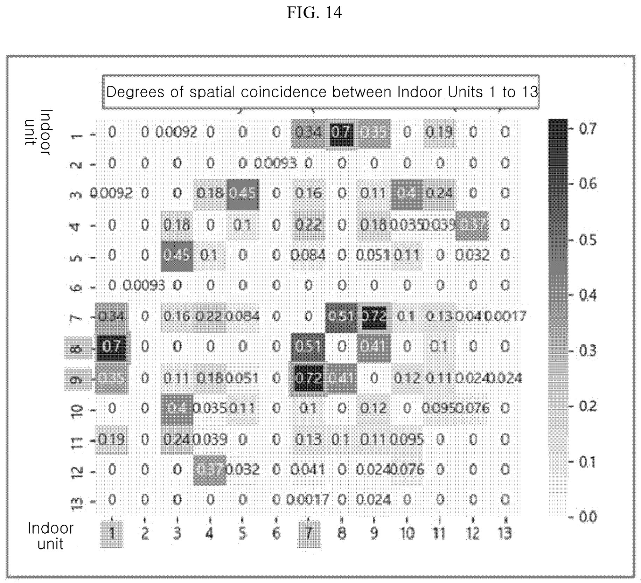

FIG. 13 is a simplified floor plan of another site, and FIG. 14 is a diagram showing the degrees of spatial coincidence between indoor units arranged at the site of FIG. 13 when the operation rate of the indoor units is 50% or more.

Referring to FIG. 13, Indoor Units 7, 9, and 12 are arranged in the same space, Indoor Units 1 and 8 are arranged in the same space, and the remaining indoor units may be respectively arranged in the separate rooms.

Referring to FIG. 14, with respect to Indoor Unit 1, the degree of spatial coincidence with Indoor Unit 8 is 0.7, which is higher than those with other indoor units. Accordingly, Indoor Units 1 and 8 may be classified as indoor units arranged in the same space.

In addition, with respect to Indoor Unit 7, the degree of spatial coincidence with Indoor Unit 9 is 0.72, which is higher than those with other indoor units. Accordingly, Indoor Units 7 and 9 may be classified as indoor units arranged in the same space.

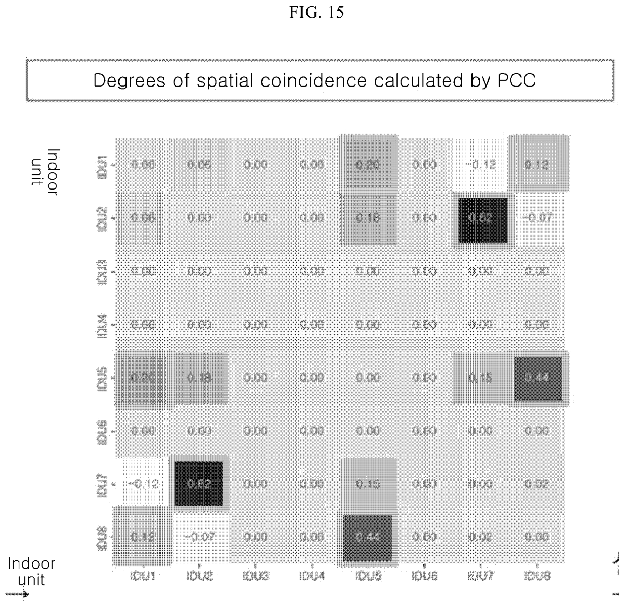

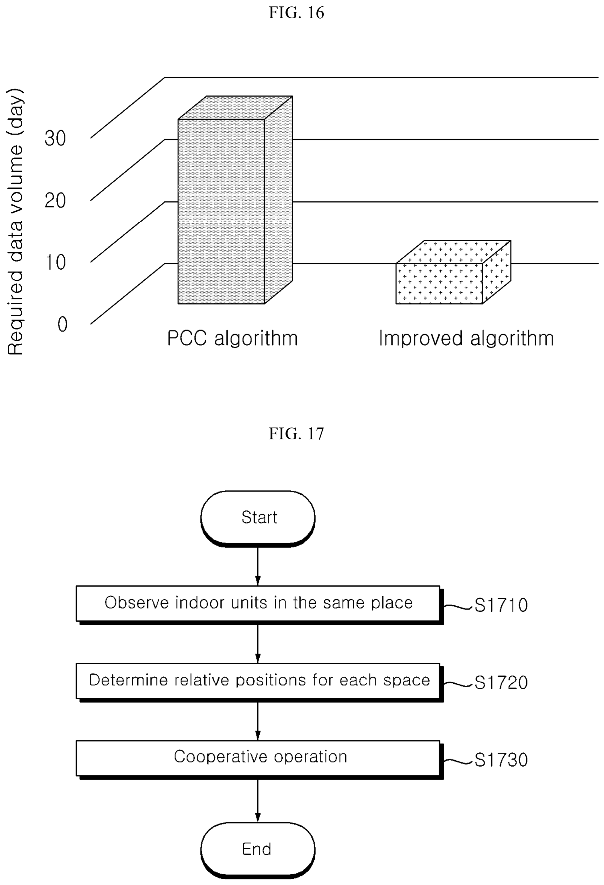

FIGS. 15 and 16 are diagrams referenced in the description of a comparison between an indoor unit observation algorithm according to one embodiment of the present disclosure and a conventional Pearson correlation coefficient (PCC) algorithm.

The Pearson correlation coefficient algorithm is an algorithm that utilizes a Pearson correlation coefficient which measures linear correlation between two variables. The Pearson correlation coefficient is the covariance of the two variables divided by the product of their respective standard deviations.

Each element value of a variable vector is normalized by subtracting the mean from the element value, and the similarity between the normalized values may be observed.

FIG. 15 illustrates the result of calculating degrees of spatial coincidence by using the Pearson correlation coefficient algorithm under the same conditions as FIG. 10.

Referring to FIG. 15, with respect to Indoor Unit 1, the degree of spatial coincidence with Indoor Unit 5 is 0.20, the degree of spatial coincidence with Indoor Unit 8 is 0.12, and the degree of spatial coincidence with Indoor Unit 2 is 0.06.

In addition, with respect to Indoor Unit 5, the degree of spatial coincidence with Indoor Unit 1 is 0.20, the degree of spatial coincidence with Indoor Unit 8 is 0.44, and the degree of spatial coincidence with Indoor Unit 2 is 0.18.

Accordingly, as shown in FIG. 10, it may be difficult to accurately classify Indoor Units 1, 5, and 8 as indoor units arranged in the same space.

FIG. 16 illustrates a comparison of data processing volume between the indoor unit observation algorithm according to an embodiment of the present disclosure and a conventional Pearson correlation coefficient algorithm.

Referring to FIG. 16, according to at least one embodiment of the present disclosure, the time and data processing volume required to automatically determine the installation spaces of indoor units may be reduced. For example, the time required for classification may be shortened from the existing more than one month to one week.

According to the present disclosure, the required time may be reduced compared to other indoor unit search algorithms. By collecting installation information for each site in a shorter time, the user may be able to use cooperative operation control more quickly and thereby enjoy an improved comfort effect.

FIG. 17 is a flowchart illustrating a control method of an air conditioner according to an embodiment of the present disclosure.

Referring to FIG. 17, the air conditioner 100 may classify indoor units 31 arranged in the same indoor space (S1710).

As described above with reference to FIGS. 1 to 16, the air conditioner 100 may classify indoor units 31 for each indoor space based on data acquired from respective sensors of a plurality of indoor units 31 and reinforcement learning.

In addition, the air conditioner 100 may determine indoor units 31 being arranged in the same space. The air conditioner 100 may determine that indoor units 31 having a high degree of spatial coincidence are arranged in the same space.

The air conditioner 100 may determine the relative positions of the indoor units 31 arranged in the same indoor space (S1720).

For example, the air conditioner 100 may determine that indoor units 31 with a higher degree of spatial coincidence are more adjacent to each other.

Alternatively, the air conditioner 100 may determine the relative positions of the indoor units 31 arranged in the same indoor space by comparing the temperature distributions and/or humidity distributions of the indoor units 31.

In addition, the air conditioner 100 may determine an adjacent indoor unit with respect to a certain indoor unit. For example, the air conditioner 100 may analyze the trend of indoor unit temperature data of a certain indoor unit (reference indoor unit), and based on the trend of the temperature data of the reference indoor unit, may determine that, among the remaining indoor units 31 excluding the reference indoor unit, an indoor unit that follows the trend of the reference indoor unit's temperature data is an indoor unit adjacent to the reference indoor unit. In other words, an indoor unit having a similar pattern may be determined as an adjacent indoor unit.

The air conditioner 100 may perform cooperative operation control of the indoor units 31 arranged in the same indoor space so as to improve comfort more quickly (S1730).

The cooperative operation control (S1730) may include at least one of flow rate adjustment according to the temperature and humidity of the indoor space, airflow cooperative control, air volume control, on/off control, and airflow direction control.

For example, the controller 370 may control the airflow direction and air volume of each indoor unit 31 so that the temperature and humidity of the indoor space become uniform.

In addition, in order to cool or heat a specific area more quickly, the controller 370 may form an airflow directed toward the specific area.

Further, the controller 370 may perform low-noise operation by turning off some indoor units or reducing the air volume.

In addition, the controller 370 may perform air conditioning operation (i.e., heating operation or cooling operation) for each indoor space.

## Claims

1. A method for controlling an air conditioner, wherein the air conditioner comprises:
an outdoor unit (21) including a compressor (110) for compressing refrigerant;
a plurality of indoor units (31), each connected to the outdoor unit (21) through a refrigerant pipe and arranged in one or more spaces;
a sensor unit (320) having a plurality of sensors; and
a processor (500),
wherein the method comprises performing a reinforcement learning based on state, action, and reward, to determine which indoor units (31) are arranged in the same space;
wherein the reinforcement learning is based on indoor unit-specific data collected by the sensor unit (320) at a site where each of the plurality of indoor units (31) is installed; and
wherein the method comprises performing cooperative operation control of indoor units (31) arranged in the same space.

2. The method according to claim 1,
wherein the state is based on the indoor temperature of each indoor unit (31), the action is based on the pipe temperature of each indoor unit (31), and the reward is determined based on the indoor temperature of the next state according to the pipe temperature.

3. The method according to claim 1 or 2,
wherein the state is based on, or additionally based on, the indoor humidity of each indoor unit (31),
wherein the action is based on the pipe temperature of each indoor unit (31), and/or
wherein the reward is determined based on the indoor humidity of the next state according to the pipe temperature.

4. The method according to any one of claims 1 to 3, further comprising:
calculating degrees of spatial coincidence between the indoor units (31), and/or
determining that indoor units (31) between which the calculated degrees of spatial coincidence are greater than or equal to a threshold are arranged in the same space.

5. The method according to claim 4,
wherein the reinforcement learning is Q-learning,
wherein state scores are calculated based on the reward, and/or
wherein degrees of spatial coincidence are calculated based on the state scores.

6. The method according to claim 5,
wherein, when the number of the plurality of indoor units (31) is N, the state scores are tabulated in the form of an N × N table.

7. The method according to claim 5 or 6,
wherein the degrees of spatial coincidence are calculated by cosine similarity based on the state scores.

8. The method according to any one of claims 1 to 7,
wherein the processor (500) is provided in the outdoor unit; and/or
wherein the processor (500) is connected to a controller (370) of the outdoor unit (21).

9. The method according to any one of claims 1 to 8,
wherein, when there is a plurality of outdoor units, a processor (500) performing the reinforcement learning is a processor connected to a controller of any one of the plurality of outdoor units.

10. The method according to any one of claims 1 to 9, wherein the reinforcement learning is repeatedly performed until a preset reference number of times is reached.

11. The method according to any one of claims 1 to 10,
wherein the reinforcement learning is performed after the sensor unit (320) collects indoor unit-specific data for a preset reference time, and counting of the reference time is reset before the reinforcement learning is started.

12. An artificial intelligence, AI, model for performing the method according to any one of claims 1 to 11,
wherein the AI model is configured to learn from field operation data collected by the sensor unit (320) during operation of the outdoor unit (21) and the plurality of indoor units (31) installed at the site.

13. The AI model according to claim 12, wherein the AI model is an artificial neural network trained on previously collected normal data, and/or
wherein the AI model is periodically trained based on the field operation data collected by the sensor unit (320) during operation of the outdoor unit (21) and the indoor units (31) installed at the site.

14. A training method for an AI model according to claim 12 or 13,
wherein on-site training or updating of an operation data estimation model is performed using system operation data measured from the sensors, and/or
wherein by performing additional training of a basic AI model to reflect on-site conditions, a site-specific model is generated.

15. An air conditioner comprising:
an outdoor unit (21) including a compressor (110) for compressing refrigerant;
a plurality of indoor units (31), each connected to the outdoor unit (21) through a refrigerant pipe and arranged in one or more spaces;
a sensor unit (320) having a plurality of sensors; and
a processor (500),
wherein the air conditioner is configured to perform the method according to any one of the claims 1 to 14.
